(19) Europäisches Patentamt
European Patent Office
Office européen des brevets

(11) **EP 4 006 495 B1**

(12) **EUROPÄISCHE PATENTSCHRIFT**

(45) Veröffentlichungstag und Bekanntmachung des Hinweises auf die Patenterteilung:
**22.03.2023 Patentblatt 2023/12**

(21) Anmeldenummer: **21207893.5**

(22) Anmeldetag: **12.11.2021**

(51) Internationale Patentklassifikation (IPC):
**G01D 5/347** *(2006.01)*

(52) Gemeinsame Patentklassifikation (CPC):
**G01D 5/34715; G01D 5/34792;** G01D 5/268

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2020 DE 102020214778**

(43) Veröffentlichungstag der Anmeldung:
**01.06.2022 Patentblatt 2022/22**

(73) Patentinhaber: **Dr. Johannes Heidenhain GmbH 83301 Traunreut (DE)**

(72) Erfinder:
• **BENNER, Ulrich**
**83308 Trostberg (DE)**
• **NUTZINGER, Tarek**
**83377 Vachendorf (DE)**
• **KREMPKE, Daniel**
**83317 Teisendorf (DE)**
• **HAUNREITER, Johannes**
**84489 Burghausen (DE)**

(56) Entgegenhaltungen:
DE-A1-102016 211 150    US-A- 5 336 884
US-A1- 2004 217 268    US-A1- 2014 353 477
US-A1- 2017 059 368

**Beschreibung**

## GEBIET DER TECHNIK

Die vorliegende Erfindung betrifft eine optische Positionsmesseinrichtung. Diese ist zur Bestimmung der Position eines ersten Objekts gegenüber einem zweiten Objekt geeignet.

## STAND DER TECHNIK

Eine gattungsgemäße Positionsmessanordnung ist etwa aus der DE 10 2016 211 150 A1 bekannt. Diese dient zur Bestimmung der Position eines ersten Objekts gegenüber einem zweiten Objekt, wobei die Objekte relativ zueinander entlang mindestens einer Messrichtung beweglich angeordnet sind. Hierbei ist einerseits eine sich entlang der Messrichtung erstreckende Maßverkörperung vorgesehen, die mit dem ersten Objekt verbunden ist. Die Maßverkörperung umfasst eine erste Spur mit einer Inkremental-Messteilung, die aus Teilungsbereichen mit unterschiedlichen optischen Eigenschaften besteht. Die Teilungsbereiche sind entlang der Messrichtung alternierend periodisch mit der Messteilungs-Periodizität $P_{INC}$ angeordnet, wobei die Messteilungs-Periodizität $P_{INC}$ die Summe der Breiten benachbarter, unterschiedlicher Teilungsbereiche angibt. Ferner umfasst die Maßverkörperung eine zweite Spur mit einer Absolut-Messteilung, die eine Codierung zur Absolutpositionsbestimmung aufweist und aus Teilungsbereichen mit unterschiedlichen optischen Eigenschaften besteht, die entlang der Messrichtung aperiodisch angeordnet sind. Desweiteren weist die Positionsmesseinrichtung eine Abtasteinheit auf, die mit dem zweiten Objekt verbunden ist. Die Abtasteinheit umfasst mindestens eine Lichtquelle, sowie einen Detektor mit einer Absolut-Detektoranordnung zur Erfassung eines von der Absolut-Messteilung in eine Detektionsebene übertragenen aperiodischen Lichtmusters und einer Inkremental-Detektoranordnung zur Erfassung eines von der Inkremental-Messteilung in die Detektionsebene übertragenen periodischen Lichtmusters. Ferner weist die Abtasteinheit eine Faseroptik-Platte auf, die aus einer Vielzahl aneinandergrenzend angeordneter Lichtleitfasern besteht, deren Bildeintrittsflächen der Maßverkörperung und deren Bildaustrittsflächen dem Detektor zugewandt sind.

Eine derartige Positionsmesseinrichtung ermöglicht beispielsweise in einer Maschine die Position einer beweglichen Maschinenkomponente gegenüber einem demgegenüber stationären Maschinenrahmen zu bestimmen. Die bewegliche Maschinenkomponente einerseits und der stationäre Maschinenrahmen andererseits fungieren hier somit als die beiden zueinander beweglichen Objekte. Als Folgeelektronik dient eine übergeordnete Maschinensteuerung, die die erzeugten positionsabhängigen Signale etwa zur Positionierung der beweglichen Maschinenkomponente nutzt.

Die in der Abtasteinheit eingesetzte Faseroptik-Platte wird im erläuterten Ausführungsbeispiel der o.g. Druckschrift zur Abtastung der codierten Absolut-Messteilung verwendet. Das heißt, es wird im Messbetrieb über die Faseroptik-Platte ein Lichtmuster in die Detektionsebene des Detektors übertragen, das aus der Wechselwirkung des von der Lichtquelle emittierten Strahlenbündels mit der Absolut-Messteilung resultiert. Um die Inkremental-Messteilung auf der Maßverkörperung abzutasten, ist in der Abtasteinheit benachbart zur Faseroptik-Platte eine separate Abtastplatte mit einem geeigneten Abtastgitter angeordnet. Bei der Montage der Abtasteinheit hat ein derartiger Aufbau zur Folge, dass dann mit der Faseroptik-Platte und der Abtastplatte zwei Komponenten sehr präzise relativ zu den jeweiligen Detektoranordnungen ausgerichtet bzw. montiert werden müssen. Die fertigungsbedingten, unterschiedlichen Dicken der Faseroptik-Platte und der Abtastplatte haben zudem zur Folge, dass sich zwischen den benachbart angeordneten Komponenten eine Kante ausbildet. An dieser Kante kann sich im Messbetrieb Schmutz ansammeln und dadurch die Funktionsfähigkeit der Positionsmesseinrichtung gefährden.

Die Verwendung einer Faseroptik-Platte in der Abtasteinheit einer optischen Positionsmesseinrichtung ist desweiteren auch aus der EP 3 633 323 A1 bekannt. Die dort beschriebene Positionsmesseinrichtung weist jedoch keine Maßverkörperung mit separaten Spuren für eine Inkremental-Messteilung und eine Absolut-Messteilung auf. Da damit die vorstehend erläuterten Probleme in dieser Positionsmesseinrichtung nicht auftreten, können diesem Dokument auch keine Anregungen zur Optimierung der eingangs diskutierten Positionsmesseinrichtung bzw. zur Lösung der vorstehend erwähnten Probleme entnommen werden.

## ZUSAMMENFASSUNG DER ERFINDUNG

Der vorliegenden Erfindung liegt die Aufgabe zugrunde, eine optische Positionsmesseinrichtung der eingangs erläuterten Art anzugeben, die eine vereinfachte Montage der Komponenten der Abtasteinheit ermöglicht und gleichzeitig möglichst unempfindlich gegenüber eventuellen Verschmutzungen ist.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Bestimmung der Position eines ersten Objekts gegenüber einem relativ hierzu entlang mindestens einer Messrichtung beweglichen zweiten Objekt. Sie umfasst eine sich entlang der Messrichtung erstreckende Maßverkörperung, die mit dem ersten Objekt verbunden ist. Die Maßverkörperung weist eine erste Spur mit einer Inkremental-Messteilung auf, die aus Teilungsbereichen mit unterschiedlichen optischen Eigenschaften besteht, welche entlang der Messrichtung alternierend periodisch mit einer Messteilungs-Periodizität angeordnet sind, wobei die Messteilungs-Periodizität die Summe der Breiten benachbarter, unterschiedlicher Teilungsbereiche angibt. Ferner weist die Maßverkörperung eine zweite Spur mit einer Absolut-Messteilung auf, die eine Codierung zur Absolutpositionsbestimmung besitzt und aus Teilungsbereichen mit unterschiedlichen optischen Eigenschaften besteht, die entlang der Messrichtung aperiodisch angeordnet sind. Die Positionsmesseinrichtung umfasst desweiteren eine Abtasteinheit, die mit dem zweiten Objekt verbunden ist. Auf Seiten der Abtasteinheit ist mindestens eine Lichtquelle vorgesehen sowie ein Detektor mit einer Absolut-Detektoranordnung zur Erfassung eines von der Absolut-Messteilung in eine Detektionsebene übertragenen aperiodischen Lichtmusters und einer Inkremental-Detektoranordnung zur Erfassung eines von der Inkremental-Messteilung in die Detektionsebene übertragenen periodischen Lichtmusters. Ferner umfasst die Abtasteinheit eine Faseroptik-Platte, die aus einer Vielzahl aneinandergrenzend angeordneter Lichtleitfasern besteht, deren Bildeintrittsflächen der Maßverkörperung und deren Bildaustrittsflächen dem Detektor zugewandt sind. Die Faseroptik-Platte ist als durchgängiges Bauteil vor der Absolut-Detektoranordnung und der Inkremental-Detektoranordnung angeordnet, so dass derart über die Faseroptik-Platte sowohl eine Übertragung von Absolutspur-Informationen als auch von Inkrementalspur-Informationen in die jeweiligen Detektionsebenen erfolgt.

Vorzugsweise weist die Faseroptik-Platte in einem Bereich vor der Inkremental-Detektoranordnung ein Abtastgitter auf.

Hierbei kann das Abtastgitter als Amplitudengitter ausgebildet sein und aus alternierend entlang der Messrichtung angeordneten, durchlässigen und undurchlässigen strichförmigen Gitterbereichen bestehen, wobei die Gitterbereiche des Abtast-Gitters periodisch mit einer Abtastgitter-Periodizität angeordnet sind und die Abtastgitter-Periodizität die Summe der Breiten benachbarter durchlässiger und undurchlässiger Gitterbereiche angibt.

Mit Vorteil sind dabei die Lichtleitfasern in der Faseroptik-Platte entlang der Messrichtung in einem Raster mit einer mittleren Faser-Periodizität angeordnet, für die

$$P_{AG} / 2 > P_{Fx}$$

gilt, mit

$P_{Fx}$ := mittlere Faser-Periodizität entlang der Messrichtung x
$P_{AG}$ := Abtastgitter-Periodizität

Ferner ist möglich, dass das Abtastgitter auf der der Maßverkörperung zugewandten Bildeintritts-Seite der Faseroptik-Platte angeordnet ist.

Es kann zudem vorgesehen sein, dass auf der der Maßverkörperung zugewandten Bildeintritts-Seite der Faseroptik-Platte zumindest teilweise eine flächige, lichtundurchlässige Beschichtung mit einem Inkremental-Abtastfenster sowie einem Absolut-Abtastfenster angeordnet ist, wobei im Inkremental-Abtastfenster das Abtastgitter angeordnet ist.

Desweiteren kann die Abtastgitter-Periodizität ungleich der Messteilungs-Periodizität der Inkremental-Messteilung gewählt sein.

Beispielsweise kann die Abtastgitter-Periodizität gemäß

$$P_{AG} = (k \cdot P_{DET} \cdot P_{INC}) / (k \cdot P_{DET} +/- P_{INC})$$

gewählt sein, mit:

$P_{AG}$ := Abtastgitter-Periodizität
$P_{INC}$ := Messteilungs-Periodizität der Inkremental-Messteilung
$P_{DET}$ := Detektor-Periodizität der Inkremental-Detektoranordnung
$k$ := 3, 4
Ferner kann dabei

$$n \cdot P_{AG} = P_{DET}$$

gelten, mit:

$P_{AG}$ := Abtastgitter-Periodizität
$P_{DET}$ := Detektor-Periodizität der Inkremental-Detektoranordnung
$n$ := 1, 2, 3, ...

Es ist auch alternativ möglich, dass die Abtastgitter-Periodizität zumindest innerhalb eines Abtastgitterbereichs gleich der Messteilungs-Periodizität der Inkremental-Messteilung gewählt ist.

Mit Vorteil ist vorgesehen, dass die Inkremental-Detektoranordnung eine Mehrzahl von lichtempfindlichen Detektorelementen umfasst, die periodisch mit einer Detektor-Periodizität entlang der Messrichtung angeordnet sind, wobei die Detektor-Periodizität die Breite eines Detektorelements entlang der Messrichtung angibt.

Hierbei können innerhalb einer Periode des von der Inkremental-Messteilung in die Detektionsebene übertragenen periodischen Lichtmusters drei oder vier Detektorelemente entlang der Messrichtung angeordnet sein.

Es kann desweiteren vorgesehen sein, dass die Inkremental-Detektoranordnung und die Absolut-Detektoranordnung in einen Opto-ASIC integriert sind, der in einer Vertiefung eines Trägerelements angeordnet ist, wobei die Oberseite des Opto-ASICs die Oberseite des Trägerelements überragt.

Dabei kann auf der Oberseite des Opto-ASICs die Faseroptik-Platte angeordnet sein, wobei sich zumindest zwischen der Bildaustrittsfläche der Faseroptik-Platte und den Detektoranordnungen ein Zwischenraum-Medium befindet.

Als maßgeblicher Vorteil der erfindungsgemäßen Lösung ist anzuführen, dass bei der Montage der Abtasteinheit nunmehr nur noch ein einziges Bauteil relativ zum Detektor ausgerichtet und montiert werden muss, da eine durchgehende Faseroptik-Platte vor den beiden Detektoranordnungen vorgesehen ist. Die als durchgängiges Bauelement ausgebildete Faseroptik-Platte weist eine Oberfläche ohne Vorsprünge oder Kanten auf, an denen sich ansonsten ggf. Verunreinigungen ansammeln könnten.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1     eine stark schematisierte Darstellung eines Ausführungsbeispiels der erfindungsgemäßen optischen Positionsmesseinrichtung in einer Schnittansicht;

Figur 2     eine räumliche Darstellung der Faseroptik-Platte der Positionsmesseinrichtung aus Figur 1;

Figur 3     eine vergrößerte Schnittansicht der Positionsmesseinrichtung aus Figur 1 im Bereich der Inkremental-Detektoranordnung;

Figur 4     eine Darstellung mit einem Teil der Inkremental-Detektoranordnung und des Abtastgitters in einer weiteren Variante der erfindungsgemäßen optischen Positionsmesseinrichtung.

## BESCHREIBUNG DER AUSFÜHRUNGSFORMEN

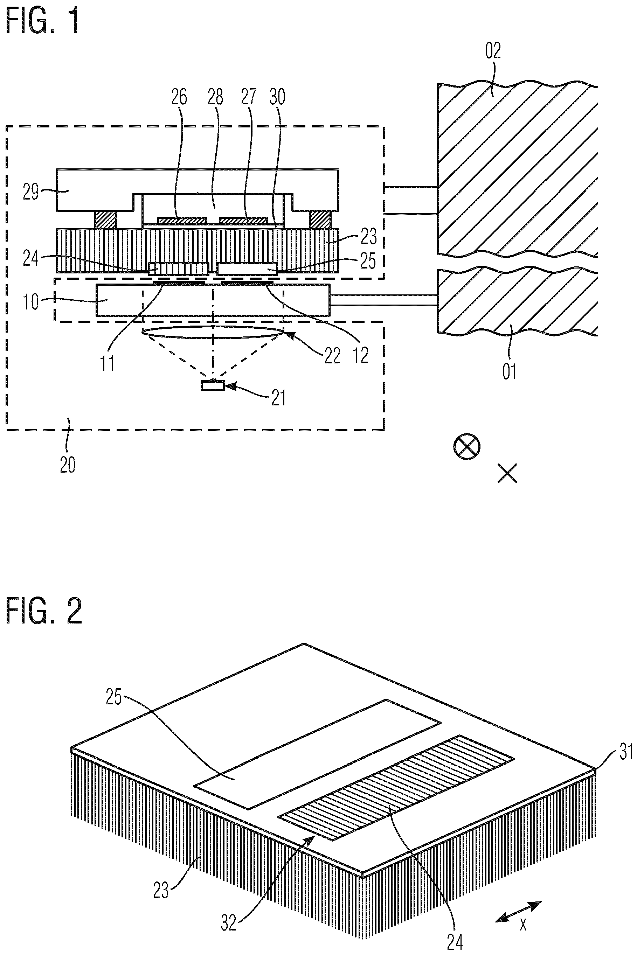

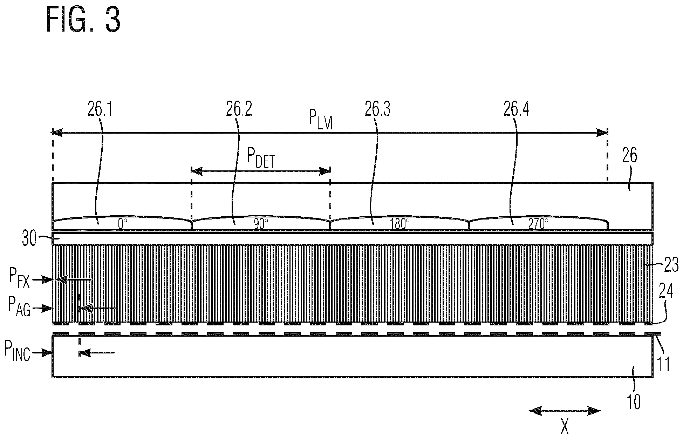

Eine schematisierte Schnittansicht eines Ausführungsbeispiels der erfindungsgemäßen Positionsmesseinrichtung ist in Figur 1 gezeigt; weitere Details dieser Vorrichtung sind in den folgenden Figuren 2 und 3 dargestellt. Anhand der verschiedenen Figuren wird nachfolgend das Ausführungsbeispiel erläutert.

Die erfindungsgemäße Positionsmesseinrichtung dient zur Bestimmung der Position eines ersten Objekts O1 gegenüber einem relativ hierzu entlang mindestens einer Messrichtung x beweglichen zweiten Objekt 02. Eines der Objekte O1, beispielsweise eine erste Maschinenkomponente, ist hierbei mit der sich entlang der Messrichtung x erstreckenden Maßverkörperung 10 der Positionsmesseinrichtung verbunden. Das andere Objekt O2, etwa eine zweite Maschinenkomponente, ist gegenüber der ersten Maschinenkomponente entlang der Messrichtung x beweglich und mit der Abtasteinheit 20 der Positionsmesseinrichtung verbunden. Im vorliegenden Ausführungsbeispiel ist eine Relativbewegung der beiden Objekte O1, O2 entlang einer linearen Messrichtung x vorgesehen, wobei die Messrichtung x in Figur 1 senkrecht zur Zeichenebene orientiert ist.

Mit Hilfe der erfindungsgemäßen Positionsmesseinrichtung lassen sich aus der optischen Abtastung der Maßverkörperung 10 positionsabhängige Signale bezüglich der Position der beiden zueinander beweglichen Objekte O1, O2 bzw. der entsprechenden Maschinenkomponenten erzeugen und an eine - nicht dargestellte - Folgeelektronik übertragen. Als Folgeelektronik kann z.B. eine übergeordnete Maschinensteuerung vorgesehen sein, die die positionsabhängigen Signale zur Positionierung der Maschinenkomponenten nutzt.

Die Maßverkörperung 10 besteht aus einem transparenten Trägersubstrat, beispielsweise aus Glas, auf dessen Oberseite im vorliegenden Ausführungsbeispiel eine erste, sich entlang der Messrichtung x erstreckende Spur mit einer Inkremental-Messteilung 11 und eine hierzu parallele, zweite Spur mit einer Absolut-Messteilung 12 angeordnet ist.

Die Inkremental-Messteilung 11 besteht aus Teilungsbereichen mit unterschiedlichen optischen Eigenschaften, die entlang der Messrichtung x alternierend periodisch mit einer Messteilungs-Periodizität $P_{INC}$ angeordnet sind; dabei gibt die Messteilungs-Periodizität $P_{INC}$ die Summe der Breiten zweier benachbarter unterschiedlicher Teilungsbereiche an. Im dargestellten Beispiel ist die Inkremental-Messteilung 11 als Amplitudengitter ausgebildet, d.h. die verschiedenen Teilungsbereiche besitzen jeweils unterschiedliche optische Durchlässigkeiten; so sind einerseits lichtundurchlässige Teilungsbereiche - beispielsweise aus Chrom - und andererseits lichtdurchlässige Teilungsbereiche vorgesehen.

Die Absolut-Messteilung 12 weist eine Codierung zur Absolutpositionsbestimmung auf und besteht aus Teilungsbereichen mit unterschiedlichen optischen Eigenschaften, die entlang der Messrichtung x aperiodisch angeordnet sind. Analog zur Inkremental-Messteilung 11 besitzen die verschiedenen Teilungsbereiche der Absolut-Messteilung 12 unterschiedliche optische Durchlässigkeiten. Die aperiodische Codierung der Absolut-Messteilung 12 kann z.B. als Pseudo Random Code (PRC) ausgebildet sein.

Aus der optischen Abtastung der Absolut-Messteilung 12 wird in der erfindungsgemäßen Positionsmesseinrichtung eine grobe Absolutpositionsinformation gewonnen, die mit der aus der optischen Abtastung der Inkremental-Messteilung 11 erzeugten, hochauflösenden Inkrementalpositionsinformation verrechnet wird. Ausgangsseitig steht damit eine hochauflösende absolute Positionsinformation in Bezug auf die Position der beiden Objekte O1, O2 zur Verfügung, die z.B. von der nachgeordneten Maschinensteuerung weiterverarbeitet werden kann.

Auf Seiten der Abtasteinheit 20 sind in der erfindungsgemäßen Positionsmesseinrichtung die weiteren erforderlichen Komponenten zur optischen Abtastung der Maßverkörperung 10 bzw. der beiden Messteilungen 11, 12 und zur Erzeugung der positionsabhängigen Signale angeordnet. Hierzu gehört die auf einer Seite der Maßverkörperung 10 angeordnete Lichtquelle 21, die beispielsweise als LED (Light Emitting Diode) ausgebildet ist und Strahlung z.B. mit einer Wellenlänge von 850nm emittiert. Der Lichtquelle 21 ist in Strahlausbreitungsrichtung eine Kollimationsoptik 22 vorgeordnet, um die in Richtung der Maßverkörperung 10 emittierten Strahlenbündel der Lichtquelle 21 zu kollimieren.

Auf der gegenüberliegenden Seite der Maßverkörperung 10 sind in der Abtasteinheit 20 weitere Komponenten angeordnet, die zur optischen Abtastung der beiden Messteilungen 11, 12 und zur Erzeugung der positionsabhängigen Signale dienen. So ist dort eine Faseroptik-Platte 23 vorgesehen, die aus einer Vielzahl aneinandergrenzend angeordneter Lichtleitfasern besteht, deren Bildeintrittsflächen der Maßverkörperung 10 und deren Bildaustrittsflächen einem nachgeordneten Detektor mit einer Inkremental-Detektoranordnung 26 und einer Absolut-Detektoranordnung 27 zugewandt sind. Die Inkremental-Detektoranordnung 26 dient hierbei zur Erfassung eines von der Inkremental-Messteilung 11 in eine Detektionsebene übertragenen periodischen Lichtmusters; mit Hilfe der Absolut-Detektoranordnung 27 wird ein von der Absolut-Messteilung 12 in eine Detektionsebene übertragenes aperiodisches Lichtmuster erfasst. Über die Faseroptik-Platte 23 werden die Informationen aus den beiden Messteilungen 11, 12 in die Detektionsebenen der zugehörigen Detektoranordnungen 26, 27 übertragen.

Die Inkremental-Detektoranordnung 26 und die Absolut-Detektoranordnung 27 sind im dargestellten Ausführungsbeispiel in einen Opto-ASIC 28 integriert, der in der Abtasteinheit 20 in einer Vertiefung eines Trägerelements 29, beispielsweise einer geeigneten Platine oder Leiterplatte, angeordnet ist. Im Opto-ASIC 28 erfolgt bereits eine erste Verarbeitung der erfassten Signale, bevor diese an eine - nicht dargestellte - Folgeelektronik übertragen werden. Wie aus Figur 1 ersichtlich, überragt die Oberseite des Opto-ASICs 28 die Oberseite des Trägerelements 29.

Zwischen der Bildaustrittsfläche der Faseroptik-Platte 23 und den in lichtempfindlichen Flächen der in den Opto-ASIC 29 integrierten Detektoranordnungen 26, 27 ist desweiteren ein Zwischenraum-Medium 30 angeordnet. Dieses wird derart gewählt, dass die aus der Bildaustrittsfläche der Faseroptik-Platte 23 austretenden Strahlenbündel auf dem Weg zu den jeweiligen Detektoranordnungen 26, 27 eine geringere Ablenkung erfahren als im Fall ohne Zwischenraum-Medium. Neben der Minimierung von Brechungsindex-Sprüngen und den damit verbundenen Reflexionen an Grenzflächen wird damit insbesondere sichergestellt, dass jeweils ein möglichst kontrastreiches Lichtmuster in den Detektionsebenen der Inkremental-Detektoranordnung 26 und der Absolut-Detektoranordnung 27 resultiert. Im Zusammenhang mit dem Zwischenraum-Medium 30 ist ferner anzuführen, dass darüber Verschmutzungen im Bereich zwischen der Faseroptik-Platte 23 und dem Opto-ASIC 29 verhindert werden können. Als Material für das Zwischenraum-Medium 30 kommen z.B. Klebstoffe mit einem geeignet gewählten Brechungsindex in Betracht. Hinsichtlich weiterer Details zum Zwischenraum-Medium 30 sei ausdrücklich auf die bereits erwähnte Druckschrift DE 10 2016 211 150 A1 verwiesen.

Um die eingangs diskutierten Probleme zu vermeiden, ist bei der erfindungsgemäßen optischen Positionsmesseinrichtung nunmehr vorgesehen, dass die in der Abtasteinheit 20 angeordnete Faseroptik-Platte 23 als durchgängiges Bauteil vor der Absolut-Detektoranordnung 27 und der Inkremental-Detektoranordnung 26 bzw. deren lichtempfindlichen Flächen angeordnet ist. Auf diese Art und Weise erfolgt über die Faseroptik-Platte 23 sowohl eine Übertragung von Absolutspur-Informationen als auch von Inkrementalspur-Informationen in die jeweiligen Detektionsebenen der zugehörigen Detektoranordnungen 26, 27. Im Unterschied hierzu wird in der DE 10 2016 211 150 A1 die Faseroptik-Platte lediglich zur Übertragung des Lichtmusters aus der codierten Absolut-Messteilung in die Detektionsebene der Absolut-Detektoranordnung verwendet. Im Abtaststrahlengang zur Inkrementalsignal-Erzeugung ist dort eine separate Abtastplatte mit einem darin integrierten Abtastgitter zwischen der Inkremental-Messteilung und der Inkremental-Detektoranordnung vorgesehen.

Bei der Montage der erfindungsgemäßen Positionsmesseinrichtung muss demzufolge im Vergleich zur bekannten Lösung lediglich noch ein einziges Bauteil in Bezug auf die Detektoranordnungen 26, 27 bzw. den Opto-ASIC korrekt ausgerichtet und montiert werden; ein deutlich verringerter MontageAufwand ist die Folge. Die der Maßverkörperung 10 zugewandte Oberfläche der Faseroptik-Platte 23 ist durchgängig eben und weist insbesondere keine Kante auf, die im Fall einer zusätzlichen Abtastplatte für die Inkrementalabtastung unvermeidbar ist. Dadurch kann sich auf dieser Oberfläche im Messbetrieb kein Schmutz ansammeln. Eine einfachere Handhabung der Faseroptik-Platte 23 während des Montageprozesses ist zudem möglich, wenn diese Oberfläche zur Vakuum-Ansaugung von einer geeigneten Positioniervorrichtung genutzt werden kann. Ferner kann die Dicke der Faseroptik-Platte 23 im Grunde beliebig gewählt werden. Auf diese Art und Weise ist es möglich, durch die Dimensionierung der Faseroptik-Platte 23 einen mechanischen Schutz für die im Strahlengang nachgeordneten, empfindlichen Komponenten zu gewährleisten.

Die eingesetzte Faseroptik-Platte 23 besteht aus einer Vielzahl aneinandergrenzend angeordneter Lichtleitfasern, die miteinander verschmolzen sind und zu einer planparallelen Platte geschnitten und geschliffen werden. Kommerziell erhältlich sind solche Faseroptik-Platten unter der Bezeichnung "Fiber Optic Faceplates".

Im Hinblick auf die Funktion der Faseroptik-Platte 23 zur Abtastung der Absolut-Messteilung 12 und die Übertragung der Absolutspur-Informationen in die Detektionsebene der Absolut-Detektoranordnung 27 sei auf die DE 10 2016 211 150 A1 verwiesen.

Um auch die Inkrementalspur-Informationen über die Faseroptik-Platte 23 in die Detektionsebene der Inkremental-Detektoranordnung übertragen zu können, erweisen sich in der erfindungsgemäßen Positionsmesseinrichtung weitere Maßnahmen als vorteilhaft. So ist auf der Faseroptik-Platte 23 in einem Bereich vor der Inkremental-Detektoranordnung 26 ein Abtastgitter 24 angeordnet. Im vorliegenden Ausführungsbeispiel ist die Anordnung des Abtastgitters 24 auf der der Maßverkörperung 10 zugewandten Bildeintrittsseite der Faseroptik-Platte 23 vorgesehen. Das Abtastgitter 24 ist hierbei als Amplitudengitter ausgebildet. Dieses besteht aus in Messrichtung x periodisch angeordneten, durchlässigen und undurchlässigen strichförmigen Gitterbereichen, deren Längsrichtung senkrecht zur Messrichtung x orientiert ist. Als Abtastgitter-Periodizität $P_{AG}$ sei dabei im Folgenden die Breite benachbart angeordneter, durchlässiger und undurchlässiger Gitterbereiche im Abtastgitter 24 bezeichnet.

In einem möglichen Ausführungsbeispiel der erfindungsgemäßen optischen Positionsmesseinrichtung wird die Abtastgitter-Periodizität $P_{AG}$ deutlich größer als eine mittlere Faser-Periodizität $P_{Fx}$ gewählt. Diese gibt ein Maß für die mittlere Periodizität des Rasters an Lichtleitfasern entlang der Messrichtung x in der Faseroptik-Platte 23 an. Vorzugsweise ist dabei vorgesehen, dass für diese beiden Periodizitäten die nachfolgende Beziehung gilt:

$$P_{AG} / 2 > P_{Fx} \qquad \text{(Gl. 1)}$$

mit

$P_{Fx}$ := mittlere Faser-Periodizität entlang der Messrichtung x
$P_{AG}$ := Abtastgitter-Periodizität

Über eine derartige Dimensionierung der beiden Periodizitäten $P_{AG}$, $P_{Fx}$ wird sichergestellt, dass im Bereich der durchlässigen Gitterbereiche des Abtastgitters 24 möglichst viele Lichtleitfasern zur Signalübertragung beitragen.

Eine entsprechende Faseroptik-Platte 23 ist in Figur 2 in einer perspektivischen Darstellung gezeigt. Die Oberseite der Faseroptik-Platte 23 stellt dabei die Bildeintritts-Seite dar, die in der erfindungsgemäßen Positionsmesseinrichtung der Maßverkörperung zugewandt ist. Wie aus der Figur ersichtlich, ist auf der Oberseite der Faseroptik-Platte 23 eine flächige, lichtundurchlässige Beschichtung 31 angeordnet, die zwei rechteckförmige Abtastfenster 32, 25 aufweist. Zum einen ist dabei ein Inkremental-Abtastfenster 32 in der Beschichtung 31 vorgesehen, in dem das Abtastgitter 24 angeordnet ist. Zum anderen weist die Beschichtung 31 ein Absolut-Abtastfenster 25 auf, das weitgehend durchlässig ausgebildet ist. Das Inkremental-Abtastfenster 32 ist in einem Bereich der Faseroptik-Abtastplatte 23 vor der Inkremental-Detektoranordnung 26 angeordnet, das Absolut-Abtastfenster 25 in einem Bereich der Faseroptik-Abtastplatte 23 vor der Absolut-Detektoranordnung 27.

Der Faseroptik-Platte 23 nachgeordnet ist in der erfindungsgemäßen Positionsmesseinrichtung der Detektor mit der Absolut-Detektoranordnung 27 und der Inkremental-Detektoranordnung 26.

Die Absolut-Detektoranordnung 27 besteht dabei aus einer entlang der Messrichtung x periodischen Anordnung einzelner lichtempfindlicher Detektorelemente, beispielsweise einer geeigneten CCD-Zeile.

Die Inkremental-Detektoranordnung 26 umfasst eine Mehrzahl von lichtempfindlichen Detektorelementen, die periodisch mit einer Detektor-Periodizität $P_{DET}$ entlang der Messrichtung x angeordnet sind. Die Detektor-Periodizität $P_{DET}$ gibt dabei die Breite eines Detektorelements entlang der Messrichtung x an. In diesem Zusammenhang sei auf die Darstellung der Figur 3 verwiesen, die eine schematisierte, vergrößerte Schnittansicht der erfindungsgemäßen Positionsmesseinrichtung im Bereich zwischen der Inkremental-Detektoranordnung 26 und dem Abtastgitter 24 zeigt.

Im dargestellten Ausführungsbeispiel der Figur 3 ist auf der Maßverkörperung 10 eine Messteilungs-Periodizität $P_{INC} = 20\mu m$ für die Inkremental-Messteilung 11 vorgesehen. Das Abtastgitter 24 auf der bildeintrittsseitigen Seite der Faseroptik-Platte 23 besitzt eine Abtastgitter-Periodizität $P_{AG} = 19,512\mu m$ und weicht damit geringfügig von der Messteilungs-Periodizität $P_{INC}$ ab. Das aus der Wechselwirkung der Strahlenbündel mit der Inkremental-Messteilung 11 und dem Abtastgitter 24 resultierende periodische Lichtmuster wird über die Faseroptik-Platte 23 in die Detektionsebene der Inkremental-Detektoranordnung 26 übertragen; es besitzt eine Lichtmuster-Periodizität $P_{LM} = 800\mu m$. Wie aus Figur 3 ersichtlich, sind innerhalb einer Periode des Lichtmusters in der Detektionsebene vier Detektorelemente 26.1 - 26.4 entlang der Messrichtung x angeordnet, an denen im Fall der Relativbewegung von Maßverkörperung 10 und Abtasteinheit 20 phasenverschobene Inkrementalsignale mit den in der Figur angegebenen relativen Phasenlagen 0°, 90°, 180°, 270° resultieren; die Detektor-Periodizität $P_{DET}$ beträgt im vorliegenden Ausführungsbeispiel $P_{DET} = 200\mu m$.

Nachfolgend werden Varianten der erfindungsgemäßen optischen Positionsmesseinrichtung näher betrachtet, die sich i.w. durch die Wahl der Abtastgitter-Periodizität $P_{AG}$ unterscheiden.

In einer ersten Variante wird die Abtastgitter-Periodizität $P_{AG}$ analog zum erläuterten Beispiel aus Figur 3 gewählt, nämlich dergestalt, dass die Abtastgitter-Periodizität $P_{AG}$ ungleich der Messteilungs-Periodizität $P_{INC}$ der Inkremental-Messteilung gewählt wird, d.h. $P_{AG} \neq P_{ING}$.

In diesem Fall resultiert nach der Wechselwirkung der von der Lichtquelle emittierten Strahlenbündel mit der Inkremental-Messteilung und dem Abtastgitter in der Detektionsebene ein periodisches (Vernier-) Lichtmuster mit der Lichtmuster-Periodizität $P_{LM}$. Dabei ergibt sich die Lichtmuster-Periodizität $P_{LM}$ gemäß folgender Beziehung:

$$P_{LM} = +/- \, P_{AG} \cdot P_{INC} \, / \, (P_{AG} - P_{INC}) \qquad (Gl. 2)$$

mit:

$P_{LM}$ := Lichtmuster-Periodizität
$P_{AG}$ := Abtastgitter-Periodizität
$P_{INC}$ := Messteilungs-Periodizität

Innerhalb einer Lichtmuster-Periode werden in der Inkremental-Detektoranordnung dann üblicherweise drei oder vier Detektorelemente gleichmäßig verteilt angeordnet. Diese liefern bei einer Relativbewegung von Maßverkörperung und Abtasteinheit drei um 120° oder vier um 90° phasenverschobene Inkrementalsignale. Typischerweise werden mit Hilfe der Inkremental-Detektoranordnung mehrere (N) Lichtmuster-Perioden abgetastet. Für jede Inkrementalsignal-Phase tragen dann mehrere (N) parallel-verschaltete Detektorelemente zur Signalerzeugung bei. Werden pro Lichtmuster-Periode demzufolge k (3, 4) Detektorelemente genutzt, so gilt:

$$k \cdot P_{DET} = +/- \, P_{AG} \cdot P_{INC} \, / \, (P_{AG} - P_{INC}) \qquad (Gl. 3)$$

mit:

$k := 3, 4$
$P_{OET}$ := Detektor-Periodizität
$P_{LM}$ := Lichtmuster-Periodizität
$P_{AG}$ := Abtastgitter-Periodizität
$P_{INC}$ := Messteilungs-Periodizität

Die erforderliche Abtastgitter-Periodizität $P_{AG}$ ergibt sich bei vorgegebener Messteilungs-Periodizität $P_{INC}$ und Detektor-Periodizität $P_{DET}$ aus dieser Beziehung dann gemäß

$$P_{AG} = (k \cdot P_{DET} \cdot P_{INC}) \, / \, (k \cdot P_{DET} +/- P_{INC}) \qquad (Gl. 4)$$

mit:

$P_{AG}$ := Abtastgitter-Periodizität
$P_{INC}$ := Messteilungs-Periodizität der Inkremental-Messteilung
$P_{DET}$ := Detektor-Periodizität der Inkremental-Detektoranordnung
k := 3, 4

Im Fall der ersten betrachteten Variante mit $P_{AG} \neq P_{INC}$ ist zudem noch zu beachten, in welchem Maß sich die Abtastgitter-Periodizität $P_{AG}$ und die Messteilungs-Periodizität $P_{INC}$ voneinander unterscheiden. Davon hängt i.w. ab, wie viele lichtundurchlässige Gitterbereiche pro Detektorelement zur Signalgewinnung beitragen.

Liegt wie im obigen Beispiel der Figur 3 nur ein geringer Unterschied zwischen der Abtastgitter-Periodizität $P_{AG}$ und der Messteilungs-Periodizität $P_{INC}$ vor, so trägt für die phasenverschiedenen Detektorelemente jeweils eine ähnliche Anzahl von lichtundurchlässigen Gitterbereichen des Abtastgitters pro Detektorelement zur Signalgewinnung bei; die resultierenden, phasenverschobenen Inkrementalsignale unterscheiden sich in diesem Fall dann nur unwesentlich in Bezug auf ihre Offsets, Amplituden- und Phasenbeziehungen.

Differieren hingegen die Abtastgitter-Periodizität $P_{AG}$ und die Messteilungs-Periodizität $P_{INC}$ signifikant, so kann es vorkommen, dass eine unterschiedliche Anzahl von lichtundurchlässigen Gitterbereichen des Abtastgitters pro Detektorelement zur Signalgewinnung beiträgt. Als Folge davon weisen die resultierenden phasenverschobenen Inkrementalsignale deutliche Unterschiede in Bezug auf ihre Offsets, Amplituden- und Phasenbeziehungen auf; es können Fehler bei der Positionsbestimmung resultieren. Um diesem Problem entgegenzuwirken, kann als weitere Bedingung für die Auslegung des Abtastgitters vorgegeben werden, dass für jedes Detektorelement die gleiche Anzahl n von lichtundurchlässigen Gitterbereichen des Abtastgitters zur Signalgewinnung beitragen soll, d.h. es muss dann zusätzlich die folgende Bedingung erfüllt sein:

$$n \cdot P_{AG} = P_{DET} \qquad (Gl.\ 5)$$

mit:

$P_{AG}$ := Abtastgitter-Periodizität
$P_{DET}$ := Detektor-Periodizität der Inkremental-Detektoranordnung
n := 1, 2, 3, ...

Als Folge dieser zusätzlichen Bedingung ergibt sich, dass in der entsprechenden Positionsmesseinrichtung lediglich bestimmte zulässige Werte für die Detektor-Periodizität $P_{DET}$ bzw. Lichtmuster-Periodizität $P_{LM}$ möglich sind, die sich aus der folgenden Bedingung ergeben:

$$P_{DET} = +/-\ P_{INC}/k + n \cdot P_{INC} \qquad (Gl.\ 6)$$

mit

$P_{DET}$ := Detektor-Periodizität der Inkremental-Detektoranordnung
$P_{INC}$ := Messteilungs-Periodizität der Inkremental-Messteilung
k = 3, 4
n = 1, 2, 3, .....

Im Idealfall sollte die Detektor-Periodizität $P_{DET}$ der Inkremental-Detektoranordnung auch noch als natürliches Vielfaches der Messteilungs-Periodizität $P_{INC}$ gewählt werden, da dann das über die Faseroptikplatte transferierte Abbild der Maßstabsstruktur gefiltert würde. Gemäß Gleichung 6) ist die zusätzliche Umsetzung dieser Bedingung aber nicht möglich.

Für den Fall mit k = 4 und einer Messteilungs-Periodizität $P_{INC} = 20\mu m$ resultieren dann etwa die folgenden möglichen Werte für die Detektor-Periodizität $P_{DET}$ bzw. die Lichtmuster-Periodizität $P_{LM}$:

| n | $P_{DET}$-/$\mu$m | $P_{LM}$-/$\mu$m | $P_{DET}$+/$\mu$m | $P_{LM}$+/$\mu$m |
|---|---|---|---|---|
| 1 | 15 | 60 | 25 | 100 |
| 2 | 35 | 140 | 45 | 180 |

(fortgesetzt)

| n | $P_{DET}$-/$\mu$m | $P_{LM}$-/$\mu$m | $P_{DET}$+/$\mu$m | $P_{LM}$+/$\mu$m |
|---|---|---|---|---|
| usw. | | | | |

Da wie vorstehend erwähnt eine Ideal-Lösung mit $P_{DET} = n \cdot P_{AG}$ und $P_{DET} = i \cdot P_{INC}$ (n, i natürliche Zahlen > 0) im Rahmen einer Vernierabtastung nicht möglich ist, kann man versuchen, einen optimalen Kompromiss zu finden. Dieser kann so aussehen, dass n und i nicht als natürliche Zahlen gewählt werden, sondern durch reellwertige Faktoren fn und fi ersetzt werden, die möglichst nahe an natürlichen Zahlen liegen.

Mit den Bedingungen

$$P_{AG} = fn \cdot P_{DET} \qquad (Gl.\ 7a)$$

und

$$P_{INC} = fi \cdot P_{DET} \qquad (Gl.\ 7b)$$

ergibt sich mit Gl. 3) dann:

$$k \cdot P_{DET} = +/-\ fn \cdot fi \cdot P_{DET}\ /\ (fn - fi) \qquad (Gl.\ 8)$$

mit: k = 3, 4,
und somit

$$k = fi\ /\ (1 - fi\ /\ fn) \qquad (Gl.\ 9).$$

Damit resultiert zwischen $P_{DET}$ und $P_{AG}$ bzw. $P_{INC}$ jeweils eine Schwebung, deren Periodizität sich jeweils so beschreiben lässt:

$$S_{AG} = abs(P_{DET} \cdot P_{AG}\ /\ (P_{DET} - P_{AG})) \qquad (Gl.\ 10a)$$

bzw.

$$S_{INC} = abs(P_{DET} \cdot P_{AG}\ /\ ((P_{DET} - P_{INC})) \qquad (Gl.\ 10b)$$

Vorteilhaft ist nun desweiteren, wenn sich die Gesamtlänge der Inkremental-Detektoranordnung $L_{INC}$, die sich gemäß

$$L_{INC} = N \cdot k \cdot P_{DET} \qquad (Gl.\ 11)$$

(N: Anzahl der abgetasteten Vernierperioden)
ergibt, und die beiden Schwebungs-Periodizitäten $S_{AG}$ und $S_{INC}$ durch natürlichzahlige Faktoren M1 und M2 unterscheiden:

$$L_{INC} = M1 \cdot S_{AG} \qquad (Gl.\ 12a)$$

$$L_{INC} = M2 \cdot S_{INC} \qquad (Gl.\ 12b)$$

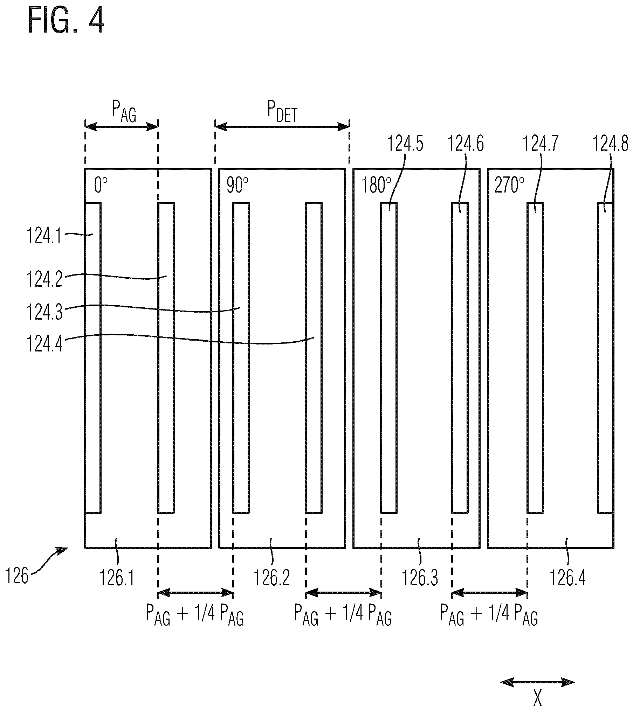

Nachfolgend wird eine zweite Variante der erfindungsgemäßen Positionsmesseinrichtung betrachtet; in dieser wird nunmehr die Abtastgitter-Periodizität $P_{AG}$ zumindest innerhalb eines Abtastgitterbereichs gleich der Messteilungs-Periodizität $P_{INC}$ der Inkremental-Messteilung gewählt, d.h. dort gilt $P_{AG} = P_{INC}$. Figur 4 zeigt eine Darstellung mit einem Teil der Inkremental-Detektoranordnung 126 und des Abtastgitters einer derartigen Variante der erfindungsgemäßen optischen Positionsmesseinrichtung, bei der die Erzeugung von k = 4 um 90° phasenverschobenen Inkrementalsignalen vorgesehen ist. Jedem Detektorelement 126.1 - 126.4 der Inkremental-Detektoranordnung 126 sind wie aus der Figur ersichtlich n = 2 der undurchlässigen Gitterbereiche 124.1 - 124.8 zugeordnet. Innerhalb von Abtastgitterbereichen, die entlang der Messrichtung x der Breite bzw. Periodizität $P_{DET}$ der Inkremental-Detektoranordnung 126 entsprechen, liegt eine Abtastgitter-Periodizität $P_{AG}$ vor, die der Messteilungs-Periodizität $P_{INC}$ der Inkremental-Messteilung entspricht. Zwischen den undurchlässigen Gitterbereichen 124.1 - 124.8, die benachbarten Detektorelementen 126.1 - 126.4 zugeordnet sind, liegt ein Abstand $P_{AG} + \frac{1}{4} P_{AG}$ vor. Analog hierzu würde im Fall von k = 3 um 120° phasenverschobenen Inkrementalsignalen dieser Abstand $P_{AG} + 1/3\, P_{AG}$ betragen.

Wird bei einer derartigen Variante die Abtastgitter-Periodizität $P_{AG}$ in der Größenordnung der Detektor-Periodizität $P_{DET}$ gewählt, d.h. es gilt dann $P_{AG} = P_{INC} = P_{DET}$, so ist einem Detektorelement der Inkremental-Detektoranordnung nur noch ein einziger (n = 1) undurchlässiger Gitterbereich des Abtastgitters zugeordnet. Zwischen undurchlässigen Gitterbereichen, die benachbarten Detektorelementen zugeordnet sind, würde auch in diesem Fall ein Abstand $P_{AG} + \frac{1}{4} P_{AG}$ vorliegen.

Neben dem konkret beschriebenen Ausführungsbeispiel existieren im Rahmen der vorliegenden Erfindung selbstverständlich noch weitere Ausgestaltungsmöglichkeiten.

So ist es möglich, die erfindungsgemäße Positionsmesseinrichtung nicht nur zur Erfassung von Relativbewegungen entlang einer linearen Messrichtung auszubilden. Es können selbstverständlich auch rotatorische Relativbewegungen um eine Rotationsachse erfasst werden.

Alternativ zum erläuterten Beispiel können die abgetasteten Messteilungen auch als Phasengitter ausgebildet sein usw..

**Patentansprüche**

1. Optische Positionsmesseinrichtung zur Bestimmung der Position eines ersten Objekts gegenüber einem relativ hierzu entlang mindestens einer Messrichtung (x) beweglichen zweiten Objekt mit

- einer sich entlang der Messrichtung (x) erstreckenden Maßverkörperung, die mit dem ersten Objekt verbunden ist, und

- eine erste Spur mit einer Inkremental-Messteilung umfasst, die aus Teilungsbereichen mit unterschiedlichen optischen Eigenschaften besteht, welche entlang der Messrichtung (x) alternierend periodisch mit einer Messteilungs-Periodizität ($P_{INC}$) angeordnet sind, wobei die Messteilungs-Periodizität ($P_{INC}$) die Summe der Breiten benachbarter, unterschiedlicher Teilungsbereiche angibt, und
- eine zweite Spur mit einer Absolut-Messteilung umfasst, die eine Codierung zur Absolutpositionsbestimmung aufweist und aus Teilungsbereichen mit unterschiedlichen optischen Eigenschaften besteht, die entlang der Messrichtung (x) aperiodisch angeordnet sind,

- einer Abtasteinheit, die mit dem zweiten Objekt verbunden ist, mit

- mindestens einer Lichtquelle,
- einem Detektor mit einer Absolut-Detektoranordnung zur Erfassung eines von der Absolut-Messteilung in eine Detektionsebene übertragenen aperiodischen Lichtmusters und einer Inkremental-Detektoranordnung zur Erfassung eines von der Inkremental-Messteilung in die Detektionsebene übertragenen periodischen Lichtmusters, sowie
- einer Faseroptik-Platte, die aus einer Vielzahl aneinandergrenzend angeordneter Lichtleitfasern besteht, deren Bildeintrittsflächen der Maßverkörperung und deren Bildaustrittsflächen dem Detektor zugewandt sind,

**dadurch gekennzeichnet,**
**dass** die Faseroptik-Platte (23) als durchgängiges Bauteil vor der Absolut-Detektoranordnung (27) und der Inkremental-Detektoranordnung (26) angeordnet ist und derart über die Faseroptik-Platte (23) sowohl eine Übertragung von Absolutspur-Informationen als auch von Inkrementalspur-Informationen in die jeweiligen Detektionsebenen erfolgt.

2. Optische Positionsmesseinrichtung nach Anspruch 1, **dadurch gekennzeichnet, dass** die Faseroptik-Platte (23) in einem Bereich vor der Inkremental-Detektoranordnung (26) ein Abtastgitter (24) aufweist.

3. Optische Positionsmesseinrichtung nach Anspruch 2, **dadurch gekennzeichnet, dass** das Abtastgitter (24) als Amplitudengitter ausgebildet ist und aus alternierend entlang der Messrichtung (x) angeordneten, durchlässigen und undurchlässigen strichförmigen Gitterbereichen besteht, wobei die Gitterbereiche des Abtast-Gitters (24) periodisch mit einer Abtastgitter-Periodizität ($P_{AG}$) angeordnet sind und die Abtastgitter-Periodizität ($P_{AG}$) die Summe der Breiten benachbarter durchlässiger und undurchlässiger Gitterbereiche angibt.

4. Optische Positionsmesseinrichtung nach Anspruch 3, **dadurch gekennzeichnet, dass** die Lichtleitfasern in der Faseroptik-Platte (23) entlang der Messrichtung (x) in einem Raster mit einer mittleren Faser-Periodizität ($P_{Fx}$) angeordnet sind, für die

$$P_{AG} / 2 > P_{Fx}$$

gilt, mit

$P_{Fx}$ := mittlere Faser-Periodizität entlang der Messrichtung x
$P_{AG}$ := Abtastgitter-Periodizität

5. Optische Positionsmesseinrichtung nach Anspruch 2, **dadurch gekennzeichnet, dass** das Abtastgitter (24) auf der der Maßverkörperung (10) zugewandten Bildeintritts-Seite der Faseroptik-Platte (23) angeordnet ist.

6. Optische Positionsmesseinrichtung nach Anspruch 2, **dadurch gekennzeichnet, dass** auf der der Maßverkörperung (10) zugewandten Bildeintritts-Seite der Faseroptik-Platte (24) zumindest teilweise eine flächige, lichtundurchlässige Beschichtung (31) mit einem Inkremental-Abtastfenster (32) sowie einem Absolut-Abtastfenster (25) angeordnet ist, wobei im Inkremental-Abtastfenster (32) das Abtastgitter (24) angeordnet ist.

7. Optische Positionsmesseinrichtung nach Anspruch 3, **dadurch gekennzeichnet, dass** die Abtastgitter-Periodizität ($P_{AG}$) ungleich der Messteilungs-Periodizität ($P_{INC}$) der Inkremental-Messteilung (11) gewählt ist.

8. Optische Positionsmesseinrichtung nach Anspruch 7, **dadurch gekennzeichnet, dass** die Abtastgitter-Periodizität ($P_{AG}$) gemäß

$$P_{AG} = (k \cdot P_{DET} \cdot P_{INC}) / (k \cdot P_{DET} +/- P_{INC})$$

gewählt ist, mit:

$P_{AG}$ := Abtastgitter-Periodizität
$P_{INC}$ := Messteilungs-Periodizität der Inkremental-Messteilung
$P_{DET}$ := Detektor-Periodizität der Inkremental-Detektoranordnung
k := 3, 4

9. Optische Positionsmesseinrichtung nach Anspruch 8, **dadurch gekennzeichnet, dass** ferner

$$n \cdot P_{AG} = P_{DET}$$

gilt, mit:

$P_{AG}$ := Abtastgitter-Periodizität
$P_{DET}$ := Detektor-Periodizität der Inkremental-Detektoranordnung
n := 1, 2, 3, ...

10. Optische Positionsmesseinrichtung nach Anspruch 3, **dadurch gekennzeichnet, dass** die Abtastgitter-Periodizität ($P_{AG}$) zumindest innerhalb eines Abtastgitterbereichs gleich der Messteilungs-Periodizität ($P_{INC}$) der Inkremental-Messteilung (11) gewählt ist.

11. Optische Positionsmesseinrichtung nach mindestens einem der vorhergehenden Ansprüche, **dadurch gekennzeichnet, dass** die Inkremental-Detektoranordnung (26) eine Mehrzahl von lichtempfindlichen Detektorelementen (26.1 - 26.4; 126.1 - 126.4) umfasst, die periodisch mit einer Detektor-Periodizität ($P_{DET}$) entlang der Messrichtung (x) angeordnet sind, wobei die Detektor-Periodizität ($P_{DET}$) die Breite eines Detektorelements (26.1 - 26.4; 126.1 - 126.4) entlang der Messrichtung (x) angibt.

12. Optische Positionsmesseinrichtung nach Anspruch 11, **dadurch gekennzeichnet, dass** innerhalb einer Periode ($P_{LM}$) des von der Inkremental-Messteilung (11) in die Detektionsebene übertragenen periodischen Lichtmusters drei oder vier Detektorelemente (26.1 - 26.4; 126.1 - 126.4) entlang der Messrichtung (x) angeordnet sind.

13. Optische Positionsmesseinrichtung nach mindestens einem der vorhergehenden Ansprüche, **dadurch gekennzeichnet, dass** die Inkremental-Detektoranordnung (26) und die Absolut-Detektoranordnung (27) in einen Opto-ASIC integriert sind, der in einer Vertiefung eines Trägerelements (29) angeordnet ist, wobei die Oberseite des Opto-ASICs die Oberseite des Trägerelements (29) überragt.

14. Optische Positionsmesseinrichtung nach Anspruch 13, **dadurch gekennzeichnet, dass** auf der Oberseite des Opto-ASICs die Faseroptik-Platte (23) angeordnet ist, wobei sich zumindest zwischen der Bildaustrittsfläche der Faseroptik-Platte (23) und den Detektoranordnungen (26, 27) ein Zwischenraum-Medium (30) befindet.

**Claims**

1. Optical position measurement device for determining the position of a first object with respect to a second object that is movable in relation thereto along at least one measurement direction (x), having

    - a measuring standard extending along the measurement direction (x), said measuring standard being connected to the first object, and

        - comprising a first track with an incremental measurement graduation which consists of graduation regions having different optical properties, which are arranged in alternation along the measurement direction (x) periodically with a measurement graduation periodicity ($P_{INC}$), wherein the measurement graduation periodicity ($P_{INC}$) indicates the sum of the widths of adjacent, different graduation regions, and
        - comprising a second track with an absolute measurement graduation which has coding for absolute position determination and consists of graduation regions with different optical properties which are arranged aperiodically along the measurement direction (x),

    - a scanning unit connected to the second object, having

        - at least one light source,
        - a detector with an absolute detector arrangement for capturing an aperiodic light pattern transferred from the absolute measurement graduation into a detection plane and an incremental detector arrangement for capturing a periodic light pattern transferred from the incremental measurement graduation into the detection plane, and also
        - a fibre-optic plate consisting of a multiplicity of optical fibres arranged so as to adjoin one another, the image entry surfaces of which face the measuring standard and the image exit surfaces of which face the detector,

    **characterized**
    **in that** the fibre-optic plate (23) is arranged as a continuous component upstream of the absolute detector arrangement (27) and the incremental detector arrangement (26) and in this way both a transfer of absolute track information and also of incremental track information into the respective detection planes takes place via the fibre-optic plate (23).

2. Optical position measurement device according to Claim 1, **characterized in that** the fibre-optic plate (23) has a scanning grating (24) in a region upstream of the incremental detector arrangement (26).

3. Optical position measurement device according to Claim 2, **characterized in that** the scanning grating (24) is embodied as an amplitude grating and consists of transmissive and opaque, stripe-type grating regions arranged in alternation along the measurement direction (x), wherein the grating regions of the scanning grating (24) are arranged periodically with a scanning grating periodicity ($P_{AG}$) and the scanning grating periodicity ($P_{AG}$) indicates the sum of the widths of adjacent transmissive and opaque grating regions.

4.   Optical position measurement device according to Claim 3, **characterized in that** the optical fibres in the fibre-optic plate (23) are arranged along the measurement direction (x) in a grid with an average fibre periodicity ($P_{Fx}$), for which

$$P_{AG} \ / \ 2 \ > \ P_{Fx},$$

with

   $P_{Fx}$ := average fibre periodicity along the measurement direction x
   $P_{AG}$ := scanning grating periodicity.

5.   Optical position measurement device according to Claim 2, **characterized in that** the scanning grating (24) is arranged on the image-entry side of the fibre-optic plate (23) facing the measuring standard (10).

6.   Optical position measurement device according to Claim 2, **characterized in that** at least in part a two-dimensional, opaque coating (31) with an incremental scanning window (32) and an absolute scanning window (25) is arranged on the image-entry side of the fibre-optic plate (24) facing the measuring standard (10), wherein the scanning grating (24) is arranged in the incremental scanning window (32).

7.   Optical position measurement device according to Claim 3, **characterized in that** the scanning grating periodicity ($P_{AG}$) is selected so as to be not equal to the measurement graduation periodicity ($P_{INC}$) of the incremental measurement graduation (11).

8.   Optical position measurement device according to Claim 7, **characterized in that** the scanning grating periodicity ($P_{AG}$) is selected according to

$$P_{AG} \ = \ (k \ \cdot \ P_{DET} \ \cdot \ P_{INC})/(k \ \cdot \ P_{DET} \ +/- \ P_{INC}),$$

with:

   $P_{AG}$ := scanning grating periodicity
   $P_{INC}$ := measurement graduation periodicity of the incremental measurement graduation
   $P_{DET}$ := detector periodicity of the incremental detector arrangement
   k := 3, 4.

9.   Optical position measurement device according to Claim 8, **characterized in that** furthermore

$$n \ \cdot \ P_{AG} \ = \ P_{DET},$$

with:

   $P_{AG}$ := scanning grating periodicity
   $P_{DET}$ := detector periodicity of the incremental detector arrangement
   n := 1, 2, 3,...

10.  Optical position measurement device according to Claim 3, **characterized in that** the scanning grating periodicity ($P_{AG}$) at least within one scanning grating region is selected to be equal to the measurement graduation periodicity ($P_{INC}$) of the incremental measurement graduation (11).

11.  Optical position measurement device according to at least one of the preceding claims, **characterized in that** the incremental detector arrangement (26) comprises a plurality of light-sensitive detector elements (26.1-26.4;

126.1-126.4) which are arranged periodically with a detector periodicity ($P_{DET}$) along the measurement direction (x), wherein the detector periodicity ($P_{DET}$) indicates the width of a detector element (26.1-26.4; 126.1-126.4) along the measurement direction (x).

12. Optical position measurement device according to Claim 11, **characterized in that** three or four detector elements (26.1-26.4; 126.1-126.4) are arranged along the measurement direction (x) within a period ($P_{LM}$) of the periodic light pattern transferred from the incremental measurement graduation (11) into the detection plane.

13. Optical position measurement device according to at least one of the preceding claims, **characterized in that** the incremental detector arrangement (26) and the absolute detector arrangement (27) are integrated into an opto-ASIC, which is arranged in a depression in a carrier element (29), wherein the upper side of the opto-ASIC projects above the upper side of the carrier element (29) .

14. Optical position measurement device according to Claim 13, **characterized in that** the fibre-optic plate (23) is arranged on the upper side of the opto-ASIC, wherein an intermediate-space medium (30) is located at least between the image exit surface of the fibre-optic plate (23) and the detector arrangements (26, 27).

## Revendications

1. Dispositif optique de mesure de position destiné à déterminer la position d'un premier objet par rapport à un deuxième objet mobile par rapport à celui-ci suivant au moins une direction de mesure (x), ledit dispositif comprenant

   - un étalon qui s'étend suivant la direction de mesure (x) et qui est relié au premier objet, et
   - qui comprend une première piste pourvue d'une graduation de mesure incrémentale qui comprend des zones de graduation qui présentent différentes propriétés optiques et qui sont disposées alternativement et périodiquement avec une périodicité de graduation de mesure ($P_{INC}$) suivant la direction de mesure (x), la périodicité de graduation de mesure ($P_{INC}$) indiquant la somme des largeurs de différentes zones de graduation adjacentes, et
   - qui comprend une deuxième piste pourvue d'une graduation de mesure absolue qui comporte un codage destiné à déterminer la position absolue et qui comprend des zones de graduation qui présentent différentes propriétés optiques et qui sont disposées de manière apériodique suivant la direction de mesure (x),
   - une unité de balayage qui est reliée au deuxième objet et qui comprend
   - au moins une source de lumière,
   - un détecteur pourvu d'un ensemble de détection absolue destiné à détecter un motif de lumière apériodique transmis par la graduation de mesure absolue dans un plan de détection et un ensemble de détection incrémentale destiné à détecter un motif de lumière périodique transmis par la graduation de mesure incrémentale dans le plan de détection, et
   - une plaque à fibres optiques qui comprend un grand nombre de fibres optiques qui sont disposées les unes à côté des autres et dont les surfaces d'entrée d'image sont dirigées vers l'étalon de mesure et dont les surfaces de sortie d'image sont dirigées vers le détecteur,

   **caractérisé en ce que**
   la plaque à fibres optiques (23) est disposée en tant que composant continu devant l'ensemble de détection absolue (27) et l'ensemble de détection incrémentale (26) et de cette manière aussi bien des informations de piste absolues que des informations de piste incrémentales sont transmises par le biais de la plaque à fibres optiques (23) dans les plans de détection respectifs.

2. Dispositif de mesure de position optique selon la revendication 1, **caractérisé en ce que** la plaque à fibres optiques (23) comporte un réseau de balayage (24) dans une région située devant l'ensemble de détection incrémentale (26).

3. Dispositif optique de mesure de position selon la revendication 2, **caractérisé en ce que** le réseau de balayage (24) est réalisé sous la forme d'un réseau d'amplitude et comprend des zones en forme de lignes transparentes et opaques disposées alternativement suivant la direction de mesure (x), les zones du réseau de balayage (24) étant disposées périodiquement avec une périodicité de réseau de balayage ($P_{AG}$) et la périodicité de réseau de balayage ($P_{AG}$) indiquant la somme des largeurs de zones de réseau transparentes et opaques adjacentes.

4. Dispositif optique de mesure de position selon la revendication 3, **caractérisé en ce que** les fibres optiques de la plaque à fibres optiques (23) sont disposées suivant la direction de mesure (x) selon une trame dont la périodicité de fibres moyenne ($P_{Fx}$) est telle que

$$P_{AG}/2 \; > \; P_{Fx}$$

avec

$P_{Fx}$ := périodicité de fibres moyenne suivant la direction de mesure x
$P_{AG}$ := périodicité de réseau de balayage.

5. Dispositif optique de mesure de position selon la revendication 2, **caractérisé en ce que** le réseau de balayage (24) est disposé du côté entrée d'image de la plaque à fibres optiques (23) qui est dirigé vers l'étalon (10).

6. Dispositif optique de mesure de position selon la revendication 2, **caractérisé en ce qu'**au moins en partie un revêtement opaque sensiblement bidimensionnel (31) muni d'une fenêtre de balayage incrémental (32) et d'une fenêtre de balayage absolu (25) est disposé du côté entrée d'image de la plaque à fibres optiques (24) qui est dirigé vers l'étalon (10), le réseau de balayage (24) étant disposé dans la fenêtre de balayage incrémental (32).

7. Dispositif optique de mesure de position selon la revendication 3, **caractérisé en ce que** la périodicité de réseau de balayage ($P_{AG}$) est choisie pour être différente de la périodicité de graduation de mesure ($P_{INC}$) de la graduation de mesure incrémentale (11).

8. Dispositif optique de mesure de position selon la revendication 7, **caractérisé en ce que** la périodicité de réseau de balayage ($P_{AG}$) est choisie conformément à

$$P_{AG} \; = \; (k \; \bullet \; P_{DET} \; \bullet \; P_{INC})/(k \; \bullet \; P_{DET} \; +/- \; P_{INC})$$

avec :

$P_{AG}$ := périodicité de réseau de balayage $P_{INC}$ := périodicité de la graduation de mesure incrémentale
$P_{DET}$ := périodicité de détection de l'ensemble de détection incrémentale
$k$ := 3, 4.

9. Dispositif optique de mesure de position selon la revendication 8, **caractérisé en ce qu'**en outre

$$n \; \bullet \; P_{AG} \; = \; P_{DET}$$

avec :

$P_{AG}$ := périodicité de réseau de balayage
$P_{DET}$ := périodicité de détection de l'ensemble de détection incrémentale
$n$ := 1,2,3, ...

10. Dispositif optique de mesure de position selon la revendication 3, **caractérisé en ce que** la périodicité de réseau de balayage ($P_{AG}$) est choisie pour être égale à la périodicité de graduation de mesure ($P_{INC}$) de la graduation de mesure incrémentale (11) au moins à l'intérieur d'une zone de réseau de balayage.

11. Dispositif optique de mesure de position selon l'une au moins des revendications précédentes, **caractérisé en ce que** l'ensemble de détection incrémentale (26) comprend une pluralité d'éléments de détection photosensibles (26.1 - 26.4 ; 126.1 - 126.4) qui sont disposés périodiquement avec une périodicité de détection ($P_{DET}$) suivant la direction de mesure (x), la périodicité de détection ($P_{DET}$) indiquant la largeur d'un élément de détection (26.1 - 26.4 ; 126.1 - 126.4) suivant la direction de mesure (x).

12. Dispositif optique de mesure de position selon la revendication 11, **caractérisé en ce que**, à l'intérieur d'une période ($P_{LM}$) du motif de lumière périodique transmis par la graduation de mesure incrémentale (11) dans le plan de détection, trois ou quatre éléments de détection (26.1 - 26.4 ; 126.1 - 126.4) sont disposés suivant la direction de mesure (x).

13. Dispositif optique de mesure de position selon l'une au moins des revendications précédentes, **caractérisé en ce que** l'ensemble de détection incrémentale (26) et l'ensemble de détection absolue (27) sont intégrés dans un opto-ASIC qui est disposé dans un évidement d'un élément porteur (29), le côté supérieur de l'opto-ASIC faisant saillie du côté supérieur de l'élément porteur (29).

14. Dispositif optique de mesure de position selon la revendication 13, **caractérisé en ce que** la plaque à fibres optiques (23) est disposée sur le côté supérieur de l'opto-ASIC, un milieu d'espace intermédiaire (30) étant situé au moins entre la surface de sortie d'image de la plaque à fibres optiques (23) et les ensembles de détection (26, 27).

# FIG. 1

# FIG. 2

# FIG. 3

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016211150 A1
- EP 3633323 A1